# EUROPÄISCHE PATENTANMELDUNG

(11) **EP 1 356 920 A2**
(43) Veröffentlichungstag der Anmeldung: **29.10.2003**
(21) Anmeldenummer: 03008302.6
(22) Anmeldetag: 10.04.2003
(51) Int. Cl.: B30B 9/32, B29B 17/00

(54) **Verfahren und Vorrichtung zur Verringerung der Grösse von Hohlkörpern**

(30) Priorität: 26.04.2002 DE 10219546
(71) Anmelder: SCHLEICHER & Co. INTERNATIONAL AKTIENGESELLSCHAFT, D-88677 Markdorf/Bodensee (DE)
(72) Erfinder: Fuchs, Roland, 88677 Markdorf (DE); Schuster, Dieter, 88633 Hattenweiler (DE)
(74) Vertreter: Patentanwälte , Ruff, Wilhelm, Beier, Dauster & Partner

(57) **Zusammenfassung**

Es werden ein Verfahren sowie eine Vorrichtung (11) zur Verringerung der Größe von beispielsweise PE-Flaschen (20) beschrieben. Dabei sind zwei Press-Schneidwalzen (12) vorgesehen, welche im Vergleich zu üblichen Schneidscheiben bekannter Dokumentenvernichter Vorsprünge (17) an den Schneidscheiben (19) aufweisen. Die Press-Schneidwalzen (12) sind so angeordnet, dass im wesentlichen lediglich die Vorsprünge (17) zum Durchschneiden des Wandungsmaterials (21) kommen. Gleichzeitig mit dem Durchschneiden werden nebeneinanderliegende Bereiche (24) gegenseitig ausgelenkt, wobei sich die Wandungskanten (25) an den Schnitten aneinander verhaken und ein Auseinanderbewegen der Wandungen (21) verhindern.

## Beschreibung

### Anwendungsgebiet und Stand der Technik

Die Erfindung betrifft ein Verfahren zur Verringerung der Größe von Hohlkörpern aus verformbaren Materialien gemäß dem Anspruch 1 sowie eine Vorrichtung zur Verringerung der Größe von Hohlkörpern aus verformbaren Materialien gemäß dem Oberbegriff des Anspruchs 10.

Heutzutage ist es, insbesondere durch das neue Verpackungsrücknahmegesetz "Dosen- und Flaschenpfand für Einwegsysteme", notwendig, dass Einkaufsmärkte Rücknahmesysteme entwickeln, mit denen sie Dosen und Flaschen mit möglichst geringem Personalaufwand zurücknehmen und entsorgen oder einem Materialkreislauf wieder zuführen können. Da beim Abtransport des Leergutes im normalen Zustand ein unnötig großes Volumen anfällt, soll zur Steigerung der Effizienz das Volumen vermindert werden. Dies ist möglich durch beispielsweise Pressen des Leergutes. Dabei besteht jedoch das Problem, insbesondere bei Kunststoffbehältern wie beispielsweise PE-Flaschen, aber auch bei Blechdosen oder dergleichen, dass nach dem Verpressen oder Zusammendrücken sich die Behälter wieder zumindest teilweise auseinander drücken oder aufstellen. Somit wird ein Teil des Effekts des Pressens wieder zunichte gemacht.

### Aufgabe und Lösung

Der Erfindung liegt die Aufgabe zugrunde, ein eingangs genanntes Verfahren sowie eine Vorrichtung zu schaffen, mit denen Hohlkörper aus verformbaren Materialien, beispielsweise PE-Flaschen, einfach und dauerhaft in ihrem Volumen verkleinert werden können. Besonders für einen effizienten Abtransport ist dies vorteilhaft.

Gelöst wird diese Aufgabe durch ein Verfahren mit den Merkmalen des Anspruchs 1 sowie eine Vorrichtung mit den Merkmalen des Anspruchs 10. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Das erfindungsgemäße Verfahren umfasst die folgenden Schritte:

Ein Hohlkörper wird derart zusammengedrückt, dass seine Wandungen aneinander liegen. Dabei können sie in etwa in einer Fläche verlaufen, wobei Fläche hier nicht exakt als dünne Fläche zu verstehen ist. Des weiteren ist diese Fläche nicht zwangsläufig eben, kann es jedoch sein. Insbesondere bildet diese Fläche eine sogenannte Neutralfläche der zusammengedrückten Wandungen.

Des weiteren werden Trennungen oder Schnitte angebracht, welche durch beide oder alle aneinanderliegende Wandungen hindurch verlaufen, insbesondere im wesentlichen jeweils in beiden Wandungen mit gleicher Länge und genau aneinanderliegend. Außerdem werden Bereiche jeweils seitlich neben einer Trennung oder einem Schnitt derart gegeneinander verformt, dass in wenigstens einem Bereich beide oder alle Wandungen des Hohlkörpers von der Fläche der zusammengedrückten Wandungen aus ausgelenkt werden. Dabei stehen die beiden Wandungen über die Fläche in diese Richtung über. Das Auslenken erfolgt zumindest in einer Richtung von der Fläche aus.

Im Sinne dieser Anmeldung wird unter dem Begriff Trennung verstanden, dass hier auf beliebige Weise das Material der Wandungen des Hohlkörpers durchtrennt wird, beispielsweise auch durch stumpfes Stanzen. Unter dem Begriff Schnitt wird verstanden, dass hier durch einen ziehenden oder scherenden Schnitt das Wandungsmaterial durchtrennt wird.

Auf diese Art und Weise überragt jeweils eine Wandung entlang der Trennung oder des Schnitts die Fläche der zusammengedrückten Wandungen und somit auch die andere Wandung bzgl. deren sonstigem Verlauf. Durch die dadurch gebildete Wandungskante in jeder Wandung liegen in Folge der Auslenkung nahe des Anfangs und des Endes des Schnitts die Wandungskanten aneinander an. Dadurch können sich diese gegeneinander verhaken oder verklemmen, so dass Rückstellkräfte der Wandungen aufgefangen werden. Die Form ist selbsterhaltend. Vorteilhaft wird hier eine Art Formschluss erzeugt durch angeraute oder ausgefranste Wandungskanten. Dies ist besonders vorteilhaft bei elastischen Materialien wie Kunststoff, beispielsweise PE.

Somit können erfindungsgemäß in die Wandungen bzw. einen zusammengedrückten Hohlkörper mehrere Trennungen oder Schnitte eingebracht werden, die gleichzeitig als Fixierungsstellen für die zusammengedrückten Wandungen dienen.

Die Trennungen oder länglichen Schnitte können derart angebracht werden, dass zwischen verschiedenen Trennungen oder Schnitten Bereiche vorgesehen sind, die unzertrennt sind. Diese Bereiche können die Trennungen oder Schnitte umgeben, insbesondere vollständig oder nahtlos. Die unzertrennten Bereiche nehmen vorteilhaft den größeren Flächenanteil ein. Dies weist den Vorteil auf, dass die Verhakung der Wandungskanten bzw. die dadurch erzielten Fixierungsstellen ausreichend gut mit den umliegenden Wandungen verbunden sind und diese so zusammenhalten können.

Vorteilhaft sind Trennung oder Schnitt länglich und in beiden Bereichen daneben werden beide Wandungen in jeweils entgegengesetzte Richtungen ausgelenkt. Dadurch werden die Wandungen jeweils über beide Seiten und in entgegengesetzter Richtung über die Fläche ausgelenkt, so dass sie über diese überstehen. Dadurch kann ein Verhaken der Wandungskanten besonders vorteilhaft erzielt werden.

Bevorzugt werden Schnitte eingebracht, die gerade sind und über eine gewisse Länge verlaufen, beispielsweise einige Millimeter bis ein oder zwei Zentimeter. Es können dabei mehrere Schnitte vorgesehen sein, die zum einen parallel zueinander und nebeneinander verlaufen können. Des weiteren können Trennungen oder Schnitte in Folge in etwa in derselben Linie angeordnet sein, also hintereinander. Dabei können seitlich nebeneinanderliegende Schnitte oder Trennungen vorgesehen sein. Diese wiederum können vorteilhaft in Längsrichtung zu Schnitten einer benachbarten Linie versetzt sein.

Das Zusammendrücken der Hohlkörper kann prinzipiell auf verschiedene Art und Weise erfolgen. Gemäß einer Möglichkeit kann es beispielsweise durch Pressen mit Vorsprüngen erfolgen, wobei die Vorsprünge die Trennungen oder Schnitte bewirken.

Bei einer vorteilhaften anderen Möglichkeit kann das Zusammendrücken der Hohlkörper durch zwei sich drehende, mit geringem Zwischenraum zueinander angeordnete Walzen erfolgen. Deren Drehachsen liegen vorteilhaft übereinander und in einer Linie senkrecht zu der Fläche der zusammengedrückten Wandungen. Vorteilhaft beträgt der Zwischenraum mindestens die zwei- bis dreifache Dicke der Wandungen.

Die Trennungen oder Schnitte können, ähnlich wie zuvor beschrieben, grundsätzlich auf vielfältige Art und Weise angebracht werden. Bei einer besonders vorteilhaften Möglichkeit kann dies durch zwei Schneidwalzen erfolgen, die sich drehen und mit geringem Zwischenraum zueinander angeordnet sind. Dabei weisen die Schneidwalzen eine Oberfläche mit Vorsprüngen und insbesondere auch mit Ausnehmungen auf. Die Vorsprünge bzw. die Ausnehmungen sind zueinander derart korrespondierend ausgebildet, dass das Eingreifen eines Vorsprungs einer Schneidwalze in einen Vorsprung oder eine Ausnehmung der anderen Schneidwalze eine Trennung oder einen Schnitt durch die Wandungen bewirkt. Insbesondere können die Schnitte durch Abscheren der Wandungen eingebracht werden. Vorteilhaft verlaufen hierzu die Vorsprünge aneinander vorbei zum Abscheren. Insbesondere können auch die Ausnehmungen hier beteiligt sein.

Die zuvor beschriebenen angerauhten oder ausgefransten Wandungskanten, die in die Wandungen eingebracht werden, können dadurch erzeugt werden, dass zuvor beschriebene Schneidwalzen angeraute oder gezahnte Schneidkanten aufweisen. Hierzu können die Schneidkanten der Schneidwalzen entsprechend bearbeitet werden, beispielsweise entsprechend angeschliffen oder sandgestrahlt werden. Eine Anrauung oder Zahnung der Schneidkanten kann auch im Mikrobereich vorgesehen sein.

Bei einer besonders vorteilhaften Möglichkeit kann das Zusammendrücken sowie das Anbringen der Trennungen oder Schnitte in einem einzigen Verfahrensschritt erfolgen, wobei hierzu zwei zusammenwirkende Press-Schneidwalzen vorgesehen sind. Diese Press-Schneidwalzen erfüllen gleichzeitig die Pressfunktion und die Schneidfunktion. Hierdurch kann das erfindungsgemäße Verfahren besonders einfach und mit geringem Aufwand durchgeführt werden.

Die erfindungsgemäße Vorrichtung weist zwei zusammenwirkende Pressmittel, insbesondere Press-Walzen, zum Zusammendrücken der Hohlkörper auf. Das Pressen erfolgt dabei derart, dass die Wandungen des Hohlkörpers, wie zuvor beschrieben, aneinander liegen und in einer Fläche verlaufen. Des weiteren weist die Vorrichtung zwei zusammenwirkende Trenn- oder Schneidmittel, insbesondere Trenn- oder Schneidwalzen, auf. Diese weisen zueinander korrespondierende Vorsprünge auf, die ineinander eingreifen. Insbesondere greifen die Vorsprünge auch in Ausnehmungen des jeweils anderen Schneidmittels ein. Dadurch werden die aneinanderliegenden Wandungen des Hohlkörpers mit Trennungen oder Schnitten getrennt oder durchgeschnitten. Die Länge der Trennung oder des Schnitts ist dabei begrenzt.

Des weiteren durchragen bei diesem Vorgang die Vorsprünge die Fläche derart, dass in einem Bereich um eine Durchtrennung oder einen Schnitt beide Wandungen jeweils seitlich daneben in wenigstens eine Richtung von der Fläche der zusammengedrückten Wandungen aus ausgelenkt sind. Dabei stehen dann beide Wandungen in diese Richtung über die Fläche über.

Die Schneidmittel sind vorteilhaft Schneidwalzen. Diese Schneidwalzen können jeweils eine Mehrzahl von Schneidwalzen aufweisen, welche von Schneidkanten axial begrenzt sein können. Dies entspricht in etwa einer Anordnung, wie sie beispielsweise aus der DE 199 11 628 bekannt ist, auf die bezüglich des Aufbaus solcher Schneidwalzen aus Schneidscheiben ausdrücklich Bezug genommen wird. Zwischen den Schneidkanten der Schneidscheiben können axiale Zwischenräume als Ausnehmungen vorgesehen sein. In diese Ausnehmungen kann jeweils eine Schneidscheibe der anderen Schneidwalze zumindest mit den Vorsprüngen, insbesondere auch mit einem größeren Teil, eingreifen. Dieses Eingreifen bildet einen Schneideingriff.

Die Schneidscheiben können derart ausgebildet sein, dass ein Schneideingriff zwischen benachbarten und zusammenwirkenden Schneidscheiben während eines Umlaufs der Schneidwalzen mindestens einmal unterbrochen ist.

In weiterer Ausgestaltung der Erfindung ist es möglich, zwei Press-Schneidwalzen vorzusehen. Diese können jeweils Pressfunktion und Schneidfunktion gleichzeitig aufweisen.

Die Schneidscheiben selber können angenähert kreisartige Umfangsflächen aufweisen. Die Umfangsflächen können durch mindestens eine sich in Umfangsrichtung erstreckende Nut unterbrochen sein. Die Nut weist dabei eine Nuttiefe auf, welche gleich oder größer ist als eine maximale Überschneidung der Schneidscheiben. Dadurch wird gewährleistet, dass eine Schneidscheibe mit ihren Vorsprüngen in der Ausnehmung der anderen Schneidscheibe verlaufen kann.

Des weiteren können Schneidscheiben mit einer angenähert kreisartigen Umfangsfläche in etwa die Form eines regelmäßigen Vielecks aufweisen. Dieses kann beispielsweise zwischen 4 und 20 Ecken aufweisen, vorzugsweise ungefähr 10. Dabei sind an den Ecken Vorsprünge vorgesehen bzw. die Ecken sind zu Vorsprüngen ausgeformt. Die Vorsprünge können dreieckförmig oder hakenartig sein.

Des weiteren kann eine Kante eines Vorsprungs durch die Verlängerung einer Außenfläche zwischen zwei Ecken des Vielecks gebildet werden. Dabei können die Außenflächen insbesondere gerade verlaufen. Derartige Vorsprünge ragen sozusagen als Verlängerung einer Kante oder Außenfläche über die ursprüngliche Ecke und somit über die nächste Kante oder Außenfläche ein Stück über.

Bevorzugt kann eine Außenfläche, welche in Umlaufrichtung vor dem Vorsprung liegt, verlängert sein und eine Kante des Vorsprungs bilden. Dabei kann vorteilhaft der Vorsprung von einem Scheitelpunkt mit dem größten radialen Abstand zu der Drehachse mit kurzer Entfernung zu der anderen Außenfläche verlaufen, wobei diese andere Außenfläche in Umlaufrichtung hinter dem Vorsprung liegt. Insbesondere kann der Vorsprung in Richtung auf die Drehachse zu abfallen.

Prinzipiell ist es wichtig, dass die Vorsprünge über die Schneidscheiben überstehen bzw. in die jeweils korrespondierende Schneidscheibe eingreifen. Besonders vorteilhaft ist es, wenn die Vorsprünge in Umlaufrichtung der Schneidwalzen stehen bzw. ragen. Auf diese Weise können die Vorsprünge, beispielsweise auch mit scharfen Vorsprungskanten versehen, zum Einziehen der Hohlkörper zwischen die Schneidwalzen dienen nach Art von Krallen.

Es ist möglich, die Schneidwalzen derart auszubilden, dass sich lediglich die Vorsprünge überschneiden bzw. nur Vorsprünge einer Schneidscheibe zwischen Vorsprünge oder Ausnehmungen der anderen Schneidscheibe greifen. Die Kanten bzw. Außenflächen der Vielecke können ansonsten stets einen Mindestabstand zueinander aufweisen. Dieser Abstand kann, wie zuvor beschrieben worden ist, für die Pressfunktion der Schneidwalzen etwas mehr als die doppelte Wandungsstärke des Hohlkörpers betragen.

Zur Durchführung eines Schnittes ist es möglich, lediglich an den Vorsprüngen Schneidkanten vorzusehen.

Vorteilhaft können die Schneidscheiben, insbesondere auch die Schneidwalzen, ähnlich zueinander ausgebildet sein, besonders vorteilhaft identisch. Des weiteren ist es möglich, dass nebeneinanderliegende Schneidscheiben der Schneidwalzen in Umfangsrichtung zueinander versetzte Vorsprünge aufweisen. Auf diese Weise können die zuvor erwähnten versetzten Linien von Trennungen oder Schnitten erzeugt werden.

Vorteilhaft ist vorgesehen, dass die Vorsprünge gleichzeitig und mit gleichartigen Bewegungen in die Wandungen des Hohlkörpers eindringen und durchdringen. Dazu laufen vorgenannte Schneidwalzen vorteilhaft synchron derart, dass die Umlaufgeschwindigkeit gleich ist und Vorsprünge jeweils spiegelbildlich zu der Fläche der zusammengedrückten Wandungen stehen.

Die Ausnehmungen der Schneidscheiben können von einem inneren Durchmesser der Schneidwalzen gebildet werden, beispielsweise einem Kern. Alternativ können sie von Zwischenräumen zwischen den Vorsprüngen gebildet werden.

Die genaue Ausbildung der Vorsprünge hängt davon ab, ob bestimmte Wandungsmaterialien von Hohlkörpern zusammengedrückt und durchtrennt oder durchschnitten werden sollen. Insbesondere können die Vorsprünge eine Höhe aufweisen, welche durch die Fläche der Wandungen ragt oder über die Außenflächen der Schneidwalzen übersteht, welche zwischen 1% und 15% des Radius einer Schneidwalze beträgt. Je höher die Vorsprünge, desto größer ist in vielen Fällen die Trennung oder der Schnitt sowie das Auslenken der Bereiche. Da die Haltefunktion jedoch vor allem durch das Entlanglaufen einer Wandungskante einer Wandung an der Wandungskante der anderen Wandungen im Bereich des Anfangs oder des Endes des Schnitts erzeugt wird, ist die Länge des Schnitts oder die Höhe der Auslenkung weniger entscheidend.

In weiterer Ausgestaltung der Erfindung können die Schneidscheiben an beiden Seiten, also in axialer Erstreckung, eine Schneidkante und Vorsprünge aufweisen. Zwischen den Schneidkanten einer Schneidscheibe kann ein umlaufender Bereich vorgesehen sein. Dieser kann derart verlaufen, dass hier kein Vorsprung vorgesehen ist. Bei einer Ausgestaltung kann hier vorgesehen sein, dass die Vorsprünge einer Schneidscheibe zu beiden Seiten des Zwischenbereichs in Umfangsrichtung ein Stück zueinander versetzt sind. Da die Vorsprünge zweier zusammenwirkender Schneidscheiben genau an der gleichen Stelle in das Wandungsmaterial eindringen sollten und synchron laufen sollten, ist hier bei Schneidscheiben mit sich über deren gesamte axiale Erstreckung ausdehnenden Vorsprüngen ein Versatz der Vorsprünge seitlich nebeneinander kaum möglich. Durch die vorbeschriebene Ausgestaltung ist dies jedoch möglich.

Des weiteren können zur Abstreifung oder zum Entfernen von Bereichen zwischen Trennungen oder Schnitten aus den Zwischenräumen oder Ausnehmungen der Schneidwalzen oder zwischen den Schneidscheiben eine Abstreifeinrichtung vorgesehen sein. Diese weist dabei für jede der Schneidwalzen ein tangential zur Schneidwelle in die Zwischenräume oder Ausnehmungen eingreifendes Leitelement auf. Dieses Leitelement kann einstückig sein. Des weiteren kann es Schlitze zur Durchführung der Schneidscheiben aufweisen. Derartige Abstreifer sind dem Fachmann allgemein aus dem Bereich von Dokumentenvernichtern bekannt.

Diese und weitere Merkmale gegen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränkt die unter diesen gemachten Aussagen nicht in ihrer Allgemeingültigkeit.

### Kurzbeschreibung der Zeichnungen

Ein Ausführungsbeispiel der Erfindung ist in den Zeichnungen dargestellt und wird im folgenden näher erläutert. In den Zeichnungen zeigen:
- Fig. 1: ein Schneidwerk mit zwei ineinandergreifenden Schneidwalzen, welche klauenartige Vorsprünge aufweisen und Wandungen eines Hohlkörpers zusammendrücken und durchlöchern,
- Fig. 2: die Press-Schneidwalzen aus Fig. 1 mit einer etwas fortgeschritteneren Drehung,
- Fig. 3: eine Schrägansicht einer Schneidscheibe einer der Press-Schneidwalzen mit in Umlaufrichtung zueinander versetzten Vorsprüngen und einer umlaufenden Ausnehmung dazwischen und
- Fig. 4: eine Draufsicht auf das Schneidwerk aus Fig. 1.

### Detaillierte Beschreibung der Ausführungsbeispiele

Die Darstellungen in den Figuren sind hauptsächlich schematisch zu verstehen und sollen vor allem das Funktionsprinzip der Erfindung wiedergeben.

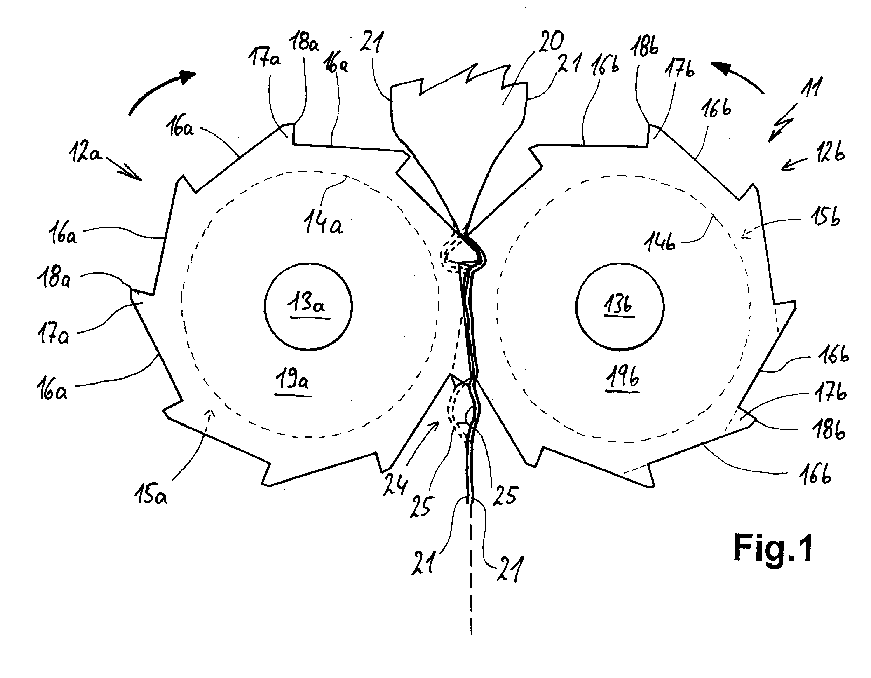

In Fig. 1 ist in einer Art Schnittdarstellung ein Schneidwerk 11 einer erfindungsgemäßen Vorrichtung zum Zusammendrücken und haltbaren Verbinden von Hohlkörpern bzw. deren Wandungen dargestellt. Das Schneidwerk 11 weist zwei Press-Schneidwalzen 12a und 12b, die zusammenwirken. Sie wirken zum einen zusammen für die Pressfunktion und drücken, wie dargestellt ist, die Wandungen 21 des Hohlkörpers 20 zusammen. Unterhalb des Schneidwerks 11 verlaufen die Wandungen 21 nahe zueinander in etwa in der Fläche 22.

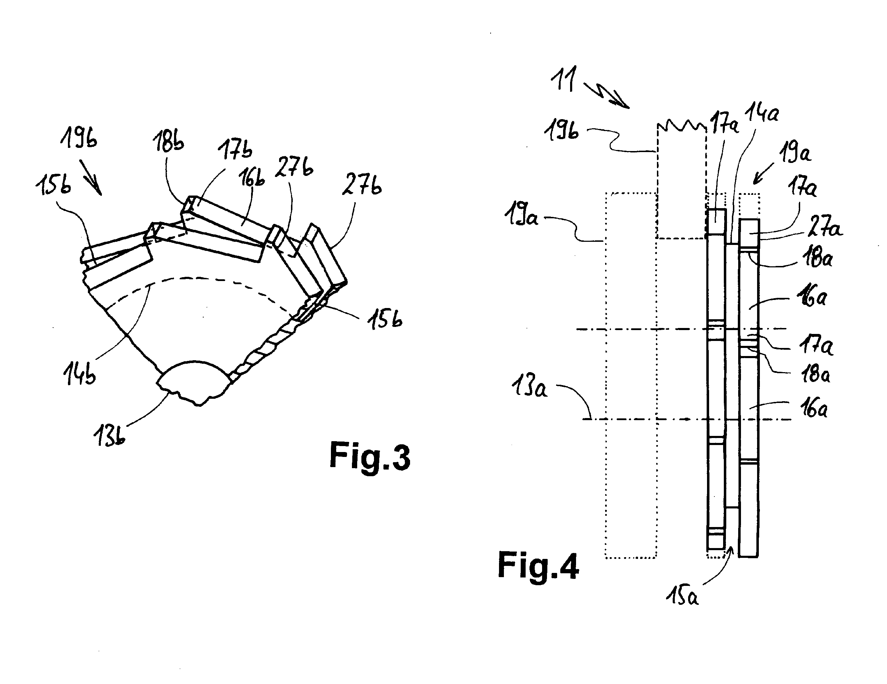

Die Press-Schneidwalzen 12a und 12b weisen Trägerwellen 13a und 13b auf. Mittels dieser Trägerwellen können sie beispielsweise angetrieben sein. Des weiteren ist gestrichelt ein Kernverlauf 14a und 14b dargestellt. Dieser Kernverlauf 14, der auch aus den Darstellungen der Figuren 3 und 4 deutlich hervorgeht, bedeutet vor allem, dass innerhalb dieses Kernverlaufs 14 die Press-Schneidwalzen 12 oder Schneidscheiben 19a und 19b massiv sind. Zwischen den über den Kernverlauf 14 ragenden Bereich der Schneidscheiben 19 verlaufen bei beiden Press-Schneidwalzen 12 Ausnehmungen 15.

Wie aus Fig. 1 zu erkennen ist, ist geht die Form der Schneidscheiben 19 von einem Vieleck aus, in diesem Fall einem Neuneck. Die Kanten zwischen zwei Ecken sind die Außenflächen 16a und 16b. Die Vorsprünge 17 sind dadurch gebildet, dass eine Außenfläche 17 in Umlaufrichtung über die andere Außenfläche hinaus verlängert wird bis zu einer Vorsprungskante 18. Von dieser Vorsprungskante 18 aus fällt der Vorsprung 17 in etwa senkrecht zu der in Umlaufrichtung nächstkommenden Außenfläche 16 ab.

Wie aus der Umlaufrichtung, die durch die Pfeile dargestellt ist, zu entnehmen ist, ergreifen die in Umlaufrichtung gerichteten Vorsprünge 17 nach Art von Klauen oder Haken den Hohlkörper 20 bzw. dessen Wandungen 21. Dann ziehen sie ihn zwischen die Press-Schneidwalzen 12.

Auf diese Art und Weise wird gleichzeitig ein sehr guter Einzug der Hohlkörper 20 erreicht.

In der Darstellung in Fig. 1 verlassen zwei zusammengedrückte Wandungen 21 des Hohlkörpers 20 mit einem durchgeschnittenen Bereich das Schneidwerk 11. Wie zu erkennen ist, bildet der durchgeschnittene Bereich 24 eine Art Ausbeulung beider Wandungen jeweils über die Fläche 22 hinaus. Dabei sind diese beiden Ausbeulungen nebeneinander in Richtung in die Zeichenebene hinein versetzt und werden durch den Schnitt getrennt. Es liegen jeweils die Wandungskanten der Wandungen 21 entlang der Schnitte an den Wandungskanten der anderen Wandung an. Auf diese Art und Weise wird Rückstellkräften des Wandungsmaterials, die danach streben, die durchgeschnittenen Bereiche durch Auseinanderbewegen der Wandungen wieder zu lösen, entgegen gewirkt.

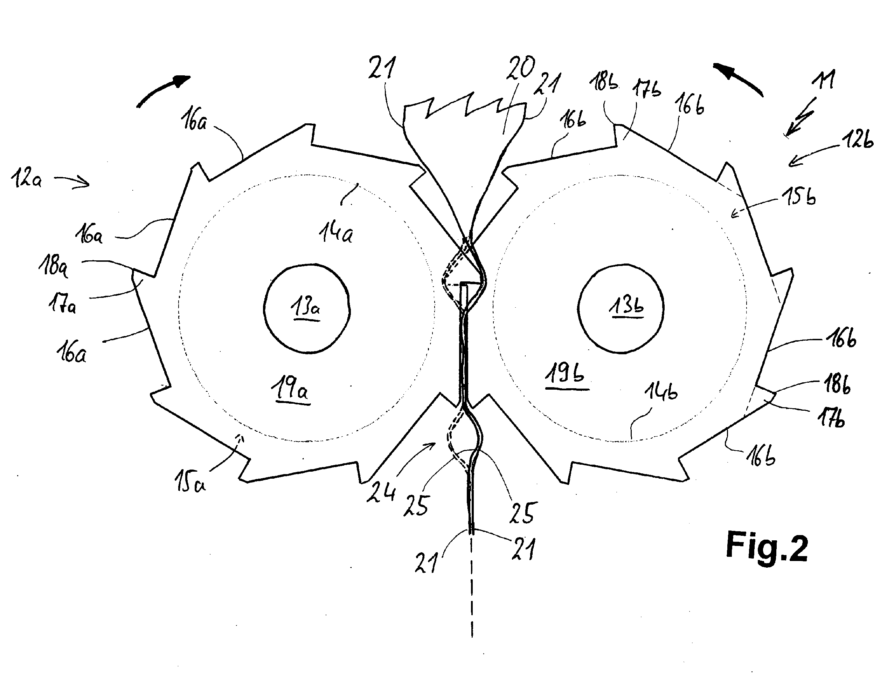

In der Darstellung in Fig. 2 haben sich die Press-Schneidwalzen 12 ein Stück weitergedreht.

In der Schrägansicht einer Schneidscheibe 19b in Fig. 3 ist zu erkennen, wie eine Schneidscheibe mit einer dazwischen verlaufenden Ausnehmung 15b quasi aus zwei Schneidscheibenhälften zusammengesetzt sein kann. Hierbei ist zu beachten, dass die Vorsprünge 17b in Umlaufrichtung zueinander versetzt sind. So können durchgeschnittene Bereiche 24 erzeugt werden die, wenn sie in seitlich nebeneinanderliegenden Linien angeordnet sind, jeweils von Linie zu Linie versetzt zueinander sind. Auf diese Weise können die durchgeschnittenen Bereiche 24, an denen die Verbindung der Wandungen mittels der Wandungskanten 25 erfolgt, besser über die Fläche 22 verteilt werden.

Anstelle solcher Schneidscheiben aus zwei zusammengesetzten Schneidscheibenhälften ist es möglich, die Vorsprünge 17 bzw. die Vorsprungskanten 18 in gedachter Verlängerung der Schneidkanten 27 direkt zu verbinden bzw. schräg zur Erstreckung der Press-Schneidwalzen 12 verlaufen zu lassen.

Selbstverständlich ist es möglich, auch mit einfacher ausgebildeten Schneidscheiben, die keine schrägen oder zwei versetzt zueinander angeordneten Vorsprünge 17 aufweisen, ein erfindungsgemäßes Schneidwerk aufzubauen.

Aus der Draufsicht auf ein Schneidwerk 11 in Fig. 4 ist erkennbar, wie die Schneidscheiben 19a und 19b abwechselnd ineinander greifen. Dabei ist eine Schneidscheibe 19a dargestellt, die derjenigen aus Fig. 3 entspricht. Die gepunktet dargestellten Verlängerungen der Schneidscheibenhälften stellen jeweils deren maximalen Profilbereich dar. Die linke Schneidscheibe 19a ist lediglich gepunktet dargestellt. Die zwischen diese beiden Schneidscheiben 19a eingreifende Schneidscheibe 19b der anderen Press-Schneidwalze 12b ist gestrichelt dargestellt.

Aus der rechten Schneidscheibe 19a kann noch einmal entnommen werden, wie die Vorsprünge 17a bzw. die Vorsprungskanten 18a der beiden Schneidscheibenhälften zueinander versetzt sind. Selbstverständlich liegt es ebenfalls im Rahmen dieser Anmeldung, die Schneidscheiben, anstelle wie in Fig. 1 als Vielecke mit weitergezogenen Kanten bzw. Ecken mehr nach Art von Zahnrädern oder dergleichen auszubilden. Des weiteren ist nicht zwangsläufig vorzusehen, dass die durchgeschnittenen Bereiche 24, wie sie in Fig. 1 zu erkennen sind, so lang sein müssen. Sie können auch weitaus kürzer sein.

Erfindungsgemäß wird somit bei einem Ausführungsbeispiel der Erfindung ein Verfahren sowie eine Vorrichtung zur Verringerung der Größe von beispielsweise PE-Flaschen beschrieben. Dabei sind zwei Press-Schneidwalzen vorgesehen, welche im Vergleich zu üblichen Schneidscheiben bekannter Dokumentenvernichter Vorsprünge an den Schneidscheiben aufweisen. Die Press-Schneidwalzen sind so angeordnet, dass im wesentlichen lediglich die Vorsprünge zum Durchschneiden des Wandungsmaterials kommen. Gleichzeitig mit dem Durchschneiden werden nebeneinanderliegende Bereiche gegenseitig ausgelenkt, wobei sich die Wandungskanten an den Schnitten aneinander verhaken und ein Auseinanderbewegen der Wandungen verhindern.

Es werden ein erfindungsgemäßes Verfahren sowie eine erfindungsgemäße Vorrichtung zur Verringerung der Größe von beispielsweise PE-Flaschen beschrieben. Dabei sind zwei Press-Schneidwalzen vorgesehen, welche im Vergleich zu üblichen Schneidscheiben bekannter Dokumentenvernichter Vorsprünge an den Schneidscheiben aufweisen. Die Press-Schneidwalzen sind so angeordnet, dass im wesentlichen lediglich die Vorsprünge zum Durchschneiden des Wandungsmaterials kommen. Gleichzeitig mit dem Durchschneiden werden nebeneinanderliegende Bereiche gegenseitig ausgelenkt, wobei sich die Wandungskanten an den Schnitten aneinander verhaken und ein Auseinanderbewegen der Wandungen verhindern.

## Patentansprüche

1. Verfahren zur Verringerung der Größe von Hohlkörpern (20) aus verformbaren Materialien wie PE-Flaschen oder Getränkedosen, mit folgenden Schritten:
- Zusammendrücken der Hohlkörper (20) derart, dass die Wandungen (21) des Hohlkörpers (20) aneinander liegen und in etwa in einer Fläche (22) verlaufen,
- Anbringen von Trennungen oder Schnitten durch beide Wandungen (21) hindurch,
- Verformung von Bereichen (24) jeweils seitlich neben einer Trennung oder einem Schnitt gegeneinander derart, dass wenigstens in einem Bereich beide Wandungen (21) in einer Richtung von der Fläche (22) der zusammengedrückten Wandungen aus ausgelenkt werden und beide Wandungen (21) über die Fläche (22) in diese Richtung überstehen.

2. Verfahren nach Anspruch 1, **dadurch gekennzeichnet, dass** die Trennungen oder länglichen Schnitte derart angebracht werden, dass zwischen verschiedenen Trennungen oder Schnitten unzertrennte Bereiche vorgesehen sind, welche die Trennungen oder Schnitte umgeben, insbesondere vollständig umgeben.

3. Verfahren nach Anspruch 1 oder 2, **dadurch gekennzeichnet, dass** in beiden Bereichen (24) neben einer Trennung oder einem Schnitt beide Wandungen (21) in entgegengesetzte Richtungen ausgelenkt werden derart, dass beide Wandungen (21) jeweils in entgegengesetzten Richtungen über die Fläche (22) überstehen.

4. Verfahren nach einem der vorhergehenden Ansprüche, **dadurch gekennzeichnet, dass** die Trennungen oder Schnitte in Folge in derselben Linie angeordnet sind, wobei vorzugsweise seitlich nebeneinander liegende Schnitte in Längsrichtung zueinander versetzt sind.

5. Verfahren nach einem der vorhergehenden Ansprüche, **dadurch gekennzeichnet, dass** das Zusammendrücken der Hohlkörper (20) durch zwei sich drehende, mit geringem Zwischenraum angeordnete Walzen (12) erfolgt, wobei deren Drehachsen übereinander und senkrecht zu der Fläche (22) der zusammengedrückten Wandungen (21) liegen, wobei vorzugsweise der Zwischenraum mindestens die doppelte Wandungsdicke beträgt.

6. Verfahren nach einem der vorhergehenden Ansprüche, **dadurch gekennzeichnet, dass** das Anbringen der Trennungen oder Schnitte durch zwei sich drehende, mit geringem Zwischenraum angeordnete Schneidwalzen (12) erfolgt, wobei die Schneidwalzen eine Oberfläche mit Vorsprüngen (17), insbesondere auch mit Ausnehmungen (15), aufweisen und zueinander korrespondieren derart, dass das Eingreifen eines Vorsprungs (17) einer Schneidwalze (12) in einen Vorsprung (17) oder eine Ausnehmung (15) der anderen Schneidwalze (12) eine Trennung oder einen Schnitt durch die Wandungen (21) bewirkt.

7. Verfahren nach einem der vorhergehenden Ansprüche, **dadurch gekennzeichnet, dass** die Schnitte durch Abscheren der Wandungen (21) eingebracht werden, wobei hierzu die Vorsprünge (17), insbesondere auch die Ausnehmungen (15), aneinander vorbeilaufen zum Abscheren.

8. Verfahren nach einem der vorhergehenden Ansprüche, **dadurch gekennzeichnet, dass** die Trennungen oder Schnitte mit angerauten oder ausgefransten Wandungskanten (25) eingebracht werden derart, dass nach dem Auslenken der Wandungen (21) die Wandungskanten (25) aneinander verhaken zur Verhinderung eines Zurückbewegens in die Fläche (22) der zusammengedrückten Wandungen (21).

9. Verfahren nach einem der vorhergehenden Ansprüche, **dadurch gekennzeichnet, dass** das Zusammendrücken des Hohlkörpers (20) und das Anbringen der Trennungen oder Schnitte in die Wandungen (21) in einem Verfahrenschritt durch zwei zusammenwirkende Press-Schneidwalzen (12a, 12b) erfolgt.

10. Vorrichtung (11) zur Verringerung der Größe von Hohlkörpern (20) aus verformbaren Materialien wie PE-Flaschen oder Getränkedosen, mit:
- zwei zusammenwirkenden Press-Walzen (12) zum Zusammendrücken der Hohlkörper (20) derart, dass die Wandungen (21) des Hohlkörpers (20) aneinander liegen und in etwa in einer Fläche (22) verlaufen,
- zwei zusammenwirkenden Trenn- oder Schneidwalzen (12) mit zueinander korrespondierenden, ineinander eingreifenden Vorsprüngen (17), insbesondere auch Ausnehmungen (15), zum Trennen oder Durchschneiden der aneinander liegenden Wandungen (21) in Form von Trennungen oder Schnitten, wobei die Schnittlänge begrenzt ist und wobei die Vorsprünge (17) durch die Fläche (22) durchragen derart, dass in einem Bereich (24) beide Wandungen (21) jeweils seitlich neben einer Trennung oder einem Schnitt in wenigstens einer Richtung von der Fläche (22) der zusammengedrückten Wandungen aus ausgelenkt sind und beide Wandungen (21) in dieser Richtung über die Fläche (22) überstehen.

11. Vorrichtung nach Anspruch 10, **dadurch gekennzeichnet, dass** die Schneidwalzen (12) jede eine Mehrzahl von Schneidscheiben (19) aufweist, die von Schneidkanten (27) axial begrenzt sind, wobei zwischen den Schneidkanten (27) axiale Zwischenräume (15) als Ausnehmungen (15) vorgesehen sind, in die jeweils die Schneidscheiben (19) der anderen Schneidwalze (12) zumindest mit den Vorsprüngen (17) zur Erzeugung eines Schneideingriffes eingreifen, wobei vorzugsweise die Schneidscheiben (19) derart ausgebildet sind, dass der Schneideingriff zwischen benachbarten Schneidscheiben (19) während eines Umlaufs der Schneidwalzen (12) mindestens einmal unterbrochen ist.

12. Vorrichtung nach Anspruch 11, **dadurch gekennzeichnet, dass** die Schneidscheiben (19) angenähert kreisartige Umfangsflächen aufweisen, die durch mindestens eine sich in Umfangsrichtung erstreckende Nut (15) unterbrochen sind, wobei die Nut eine Nuttiefe aufweist, die gleich oder größer ist als eine maximale Überschneidung der Schneidscheiben (19).

13. Vorrichtung nach einem der Ansprüche 10 bis 12, **dadurch gekennzeichnet, dass** die Schneidscheiben (9) angenähert kreisartige Umfangsflächen aufweisen, insbesondere mit der Form eines regelmäßigen Vielecks, vorzugsweise mit vier bis 20 Ecken, wobei insbesondere an den Ecken Vorsprünge (17) vorgesehen sind und die Vorsprünge dreieckförmig sind.

14. Vorrichtung nach Anspruch 13, **dadurch gekennzeichnet, dass** eine Kante eines Vorsprungs (17) durch die Verlängerung einer Außenfläche (16) zwischen zwei Ecken (17) des Vielecks gebildet wird, insbesondere mit geradem Verlauf.

15. Vorrichtung nach Anspruch 14, **dadurch gekennzeichnet, dass** die Außenfläche (16), welche in Umlaufrichtung vor dem Vorsprung (17) kommt, verlängert ist und eine Kante des Vorsprungs bildet, wobei vorzugsweise der Vorsprung (17) von einem Scheitelpunkt mit dem größten radialem Abstand zu der Drehachse mit kurzer Entfernung zu der anderen Außenfläche (16), welche in Umlaufrichtung hinter dem Vorsprung (17) ist, abfällt, insbesondere senkrecht.

16. Vorrichtung nach einem der Ansprüche 10 bis 15, **dadurch gekennzeichnet, dass** die Vorsprünge (17) in Umlaufrichtung der Schneidwalzen (12) stehen bzw. ragen.

17. Vorrichtung nach einem der Ansprüche 10 bis 16, **dadurch gekennzeichnet, dass** die Schneidwalzen (12) derart ausgebildet sind, dass sich nur die Vorsprünge (17) überschneiden und die Außenfläche n (16) der Vielecke ansonsten stets einen gewissen Abstand zueinander aufweisen, wobei vorzugsweise dieser Abstand etwas mehr als die doppelte Wandungsstärke des Hohlkörpers (20) beträgt.

18. Vorrichtung nach einem der Ansprüche 10 bis 17, **dadurch gekennzeichnet, dass** nebeneinander liegende Schneidscheiben (19) der Schneidwalzen (12) in Umfangsrichtung zueinander versetzte Vorsprünge (17) aufweisen.

19. Vorrichtung nach einem der Ansprüche 10 bis 18, **dadurch gekennzeichnet, dass** die Ausnehmungen (15) von einem inneren Durchmesser (14) der Schneidwalzen (12) gebildet werden bzw. von Zwischenbereichen zwischen den Vorsprüngen (17).

20. Vorrichtung nach einem der Ansprüche 10 bis 19, **dadurch gekennzeichnet, dass** die Schneidscheiben (19) an beiden Seiten eine Schneidkante (27) mit Vorsprüngen (17) aufweisen, wobei vorzugsweise ein umlaufender Zwischenbereich (15) zwischen den Schneidkanten (27) in Umfangsrichtung verlaufend vorgesehen ist und der Zwischenbereich keinen Vorsprung (17) aufweist, wobei insbesondere die Vorsprünge (17) zu beiden Seiten des Zwischenbereichs in Umfangsrichtung zueinander versetzt sind.

21. Vorrichtung nach einem der Ansprüche 10 bis 20, **dadurch gekennzeichnet, dass** zur Abstreifung von Bereichen zwischen Trennungen oder Schnitten aus den Zwischenräumen oder Ausnehmungen (15) der Schneidwalzen (12a, 12b) eine Abstreifeinrichtung vorgesehen ist, die für jede der Schneidwalzen (12a, 12b) ein tangential zur Schneidwelle in die Zwischenräume oder Ausnehmungen (15) eingreifendes, vorzugsweise einstückiges, Leitelement aufweist, wobei das Leitelement Schlitze zur Durchführung der Schneidscheiben (19) aufweist.
